# FASCICULE DE BREVET EUROPEEN

(11) **EP 1 330 047 B1**
(45) Date de publication et mention de la délivrance du brevet: **29.07.2009**
(21) Numéro de dépôt: 03290095.3
(22) Date de dépôt: 14.01.2003
(51) Int. Cl.: H04B 3/54

(54) **Composant pour la distribution de l'alimentation et de l'information**
Komponente zur Energie- und Informationsverteilung
Component for power and information distribution

(30) Priorité: 16.01.2002 FR 0200501
(43) Date de publication de la demande: 23.07.2003
(73) Titulaire: Valeo Electronique et Systemes de Liaison, 78180 Montigny le Bretonneux (FR)
(72) Inventeur: Laliron, Anne, 78330 Fontenay le Fleury (FR)
(74) Mandataire: Eidelsberg, Olivier Nathan

(56) Documents cités:
- EP-A- 0 634 842

## Description

La présente invention se rapporte à un composant d'alimentation d'équipements électroniques plus particulièrement destiné à l'automobile.

On connaît un protocole de multiplexage appelé couramment LIN (Local Interconnect Network) qui présente l'intérêt d'être d'un faible coût mais qui, étant à basse vitesse, ne peut être utilisable que pour les systèmes non sécuritaires, par exemple les modules de sièges, fermeture centralisée des portières, etc...

Un tel système comprend, en outre, des conducteurs d'alimentation électrique.

Le document EP 0 634 842 décrit un composant pour la distribution de l'information et de l'alimentation d'équipements électroniques prévu pour une adaptation en maison.

L'un des buts de la présente invention est de simplifier de tels ensembles et de les réaliser de manière qu'ils soient d'un montage plus aisé et qu'ils puissent être réalisés sous forme d'un organe complet à monter directement sur le véhicule.

L'ensemble, selon l'invention, est destiné aux équipements électroniques de véhicules comprenant un circuit électrique général d'alimentation et dans lequel l'ensemble utilise un protocole de type LIN avec un driver physique associé logé dans un micro-contrôleur, caractérisé en ce qu'il comprend un circuit oscillateur, un diviseur, un bloc-filtre asservi, un conditionneur de signal tout ou rien et un interrupteur disposé en aval du bloc-filtre asservi, ledit ensemble étant directement inséré sur le circuit général d'alimentation, le signal de transmission étant cadencé en fréquence et émis sur ledit circuit général d'alimentation grâce au circuit oscillateur, le diviseur fournissant au micro-contrôleur la fréquence nécessaire, tandis que pour la réception, l'interrupteur est fermé, le bloc-filtre asservi permettant de filtrer autour de la fréquence porteuse, le signal étant, par le conditionneur, reconditionné en signal tout ou rien et envoyé au micro-contrôleur.

Grâce à cette caractéristique, on peut supprimer les conducteurs électriques d'information de l'ensemble puisque le signal est directement envoyé cadencé dans le circuit général électrique d'alimentation.

De préférence, l'ensemble comprend, inséré sur le circuit général d'alimentation, un dispositif de protection et un filtre.

Le bloc-filtre est de préférence asservi.

L'invention est définie par les caractéristiques de la revendication 1.

L'invention va maintenant être décrite avec plus de détails en se référant à un mode de réalisation particulier donné à titre d'exemple seulement, et représenté aux dessins annexés :
Figure 1 est un schéma-bloc de l'ensemble de l'invention.
Figure 2 montre schématiquement une installation des ensembles selon l'invention.

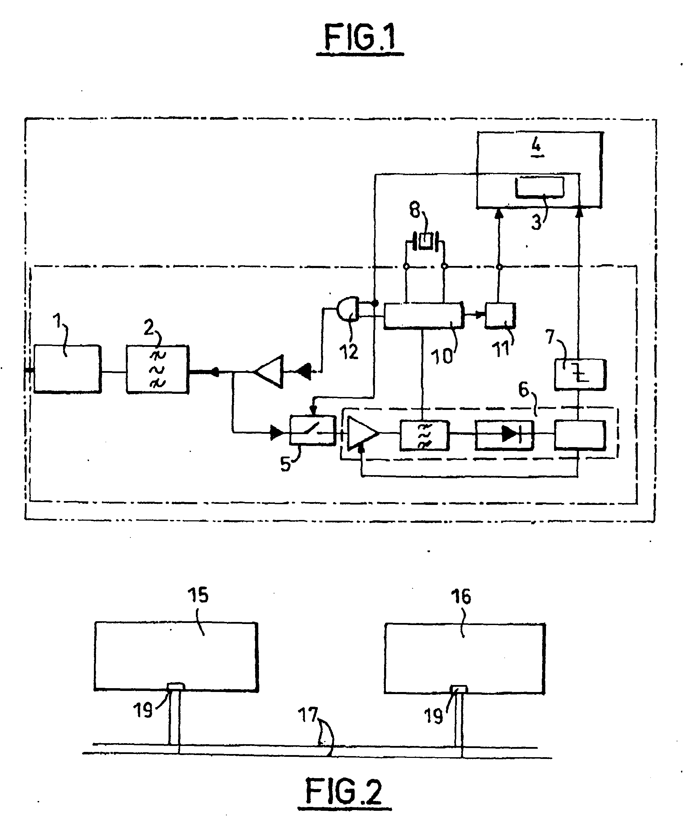

L'ensemble représenté à la figure 1 comprend, à partir d'une alimentation, un dispositif de protection 1 contre les inversions de polarité, un filtre 2 pour limiter les niveaux de tension à l'entrée du driver physique courant porteur 19.

Le signal d'alimentation est envoyé à travers un interrupteur 5 dans un bloc-filtre asservi 6 qui permet de filtrer autour d'une fréquence porteuse, le signal étant reconditionné en un signal tout ou rien par un reconditionneur 7 et envoyé au micro-contrôleur 4.

L'ensemble est pourvu d'une horloge extérieure au driver 19.

La fréquence nécessaire est obtenue par un circuit oscillateur 10 qui fournit un signal au bloc-filtre asservi 6, un diviseur 11 permettant de fournir au micro-contrôleur 4 la fréquence qui lui est nécessaire.

Le signal de transmission est cadencé en fréquence par le circuit oscillateur et envoyé sur le réseau 12 V à travers un mélangeur 12 et un adaptateur de signal 13.

Ainsi on réalise un ensemble qui s'interface avec des équipements communiquant avec les protocoles basse vitesse de type LIN.

Il permet de fournir à tout élément électronique l'alimentation que celui-ci requiert pour réaliser les différentes fonctions qui lui sont attribuées ainsi que l'information nécessaire à la communication sur un bus de données.

L'ensemble selon l'invention se connecte directement aux fils d'alimentation et de masse assurant l'alimentation du véhicule.

L'ensemble permet de démoduler l'information présente sur la ligne d'alimentation et de reconditionner celle-ci dans le format compatible du protocole LIN.

Egalement, les informations LIN provenant de la fonction électronique sont conditionnées par l'ensemble et transitent sur la ligne d'alimentation.

L'ensemble selon l'invention est directement inséré entre la ligne d'alimentation de courant électrique du véhicule et la masse, et le signal de transmission est cadencé à travers le circuit oscillateur 10 et envoyé sur la ligne d'alimentation du véhicule, la réception étant stoppée par l'interrupteur 10 qui est ouvert, tandis qu'en mode de réception l'interrupteur 10 est fermé, le filtre 6 permettant de filtrer autour de la fréquence porteuse, le signal étant reconditionné en signal tout ou rien en envoyé au micro-contrôleur 4.

La figure 2 montre schématiquement le montage de deux ensembles selon l'invention.

Sur cette figure, les références 15 et 16 désignent des équipements utilisant le protocole du type LIN, la référence 17 le réseau de puissance du véhicule et la référence 18 le retour à la masse.

Les ensembles sont référencés en 19 et sont directement connectés au réseau d'alimentation électrique du véhicule.

Les ensembles peuvent ainsi s'interfacer avec tout équipement compatible avec une connexion au réseau LIN.

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Véhicule automobile, comportant des équipements (15, 16) électroniques alimentés par un réseau (17) électrique d'alimentation et **caractérisé en ce qu'**il communique par des protocoles basse vitesse du type LIN avec un micro contrôleur (4) par l'intermédiaire d'un ensemble de distribution agencé entre le microcontrôleùr (4) et le réseau (17) électrique, l'ensemble de distribution envoyant des signaux par une ligne d'émission disposée entre le réseau électrique et le microcontrôleur et recevant des signaux des équipements (15, 16) par une ligne de réception disposée entre le réseau électrique et le microcontrôleur, l'ensemble de distribution comportant en outre ;
- un interrupteur (5) agencé de manière a être fermé pour la réception et lorsqu'il est ouvert les signaux ne pouvant passer entre le micro contrôleur (4) et le réseau électrique que par la ligne d'émission ;
- sur la ligne de réception un bloc filtre (6) agencé de manière à filtrer le signal reçu des équipements par l'intermédiaire des lignes d'alimentation du réseau autour de la fréquence porteuse du signal électrique et un conditionneur (7) de signal tout ou rien pour une transmission au microcontrôleur du signal reconditionné ;
- un circuit oscillateur (10) étant agencé de manière à cadencer en fréquence le signal émis sur la ligne d'émission et étant relié d'une part au microcontrôleur par l'intermédiaire d'un diviseur (11) pour fournir au microcontrôleur la fréquence nécessaire et, d'autre part, au bloc filtre (6) pour asservir celui-ci.

2. Composant pour la distribution de l'information et de l'alimentation d'équipements électroniques de véhicules selon la revendication 1, **caractérisé en ce qu'**il comprend, inséré sur le circuit général d'alimentation, un dispositif de protection (1) et un filtre (2).

3. Composant pour la distribution de l'information et de l'alimentation d'équipements électroniques de véhicules selon la revendication 1, **caractérisé en ce que** le bloc filtre (6) est asservi.

## Claims

1. Motor vehicle, comprising electronic equipment (15, 16) supplied by an electric supply network (17) and **characterised in that** it communicates via low speed LIN type protocols with a microcontroller (4) by means of a distribution assembly arranged between the microcontroller (4) and the electric network (17), the distribution assembly sending signals via a transmission line arranged between the electrical network and the microcontroller and receiving signals from the equipment (15, 16) via a reception line arranged between the electrical network and the microcontroller, the distribution assembly also comprising:
- a switch (5) fitted so as to be closed for reception and when it is open the signals can only pass between the microcontroller (4) and the electric network via the transmission line;
- on the receiving line a filter block (6) fitted so as to filter the signal received from the equipment by means of supply lines of the network around the carrier frequency of the electrical signal and an all-or-nothing signal conditioner (7) for transmission to the microcontroller of the reconditioned signal;
- an oscillator circuit (10) being fitted so as to time the frequency of the signal transmitted on the transmission line and connected, on the one hand, to the microcontroller by means of a divider (11) to provide the microcontroller with the necessary frequency and, on the other hand, to the filter block (6) to control the latter.

2. Component for the distribution of information and supplying the electronic equipment of vehicles according to claim 1, **characterised in that** it comprises, inserted on the general supply circuit, a protection device (1) and a filter (2).

3. Component for the distribution of information and supplying the electronic equipment of vehicles according to claim 1, **characterised in that** the filter block (6) is controlled.

## Patentansprüche

1. Kraftfahrzeug, welches von einem elektrischen Versorgungsnetzwerk (17) versorgte elektronische Einrichtungen (15, 16) aufweist und **dadurch gekennzeichnet ist, dass** es durch Niedergeschwindigkeitsprotokolle des Typs LIN mit einem Mikrocontroller (4) über eine zwischen dem Mikrocontroller (4) und dem elektrischen Netzwerk (17) angeordnete Verteilungsanordnung kommuniziert, wobei die Verteilungsanordnung über eine zwischen dem elektrischen Netzwerk und dem Mikrocontroller angeordnete Sendeleitung Signale aussendet und über eine zwischen dem elektrischen Netzwerk und dem Mikrocontroller angeordnete Empfangsleitung Signale aus den Einrichtungen (15, 16) empfängt, wobei die Verteilungsanordnung ferner Folgendes umfasst:
- einen Schalter (5), der ausgestaltet ist, um für den Empfang geschlossen zu sein, wobei die Signale, wenn der Schalter offen ist, nur über die Sendeleitung zwischen dem Mikrocontroller (4) und dem elektrischen Netzwerk strömen können;
- auf der Empfangsleitung einen Filterblock (6), der ausgestaltet ist, um das aus den Einrichtungen über die Versorgungsleitungen des Netzwerks empfangene Signal um die Trägerfrequenz des elektrischen Signals herum zu filtern, sowie einen Alles-oder-Nichts-Signalformer (7) für eine Übertragung des umgeformten Signals an den Mikrocontroller;
- wobei ein Oszillatorkreis (10) derart ausgestaltet ist, dass das über die Sendeleitung ausgesendete Signal frequenzgetaktet wird und er zum einen mit dem Mikrocontroller über einen Teiler (11), um dem Mikrokontroller die erforderliche Frequenz zu liefern, und zum anderen mit dem Filterblock (6) verbunden ist, um diesen zu steuern.

2. Komponente für die Verteilung der Information und der Versorgung von elektronischen Kraftfahrzeugeinrichtungen nach Anspruch 1, **dadurch gekennzeichnet, dass** sie eine in den allgemeinen Versorgungskreislauf eingebaute Schutzvorrichtung (1) und ein Filter (2) umfasst.

3. Komponente für die Verteilung der Information und der Versorgung von elektronischen Kraftfahrzeugeinrichtungen nach Anspruch 1, **dadurch gekennzeichnet, dass** der Filterblock (6) gesteuert ist.
